# EUROPEAN PATENT APPLICATION

(11) **EP 4 624 311 A1**
(43) Date of publication of application: **01.10.2025**
(21) Application number: 24166525.6
(22) Date of filing: 26.03.2024
(51) Int. Cl.: B62D 25/14, B60R 13/02

(54) **VEHICLE WITH A VEHICLE BODY HAVING AN INSTRUMENT PANEL CROSS BEAM AND METHOD FOR ASSEMBLING AN INSTRUMENT PANEL CROSS BEAM ON A VEHICLE BODY**

(71) Applicant: Ford Global Technologies, LLC, Dearborn, MI 48126-2701 (US)
(72) Inventor: Eberhard, Simon, 50670 Köln (DE); Djoudi, Nazim, 50933 Köln (DE); Garland, Erik James, Northville, MI, 48167 (US); Advena, Robin, 50670 Köln (DE)
(74) Representative: Markowitz, Markus

(57) **Abstract**

The invention relates to a vehicle (1), in particular motor vehicle, having a vehicle body (2) with side parts (3) opposite one another at a distance and with a vehicle floor (4), wherein an instrument panel cross beam (5) is arranged between the side parts (3) and attached thereto and a console (6) is arranged on the vehicle floor (4) and attached thereto, wherein at least one support strut (7) extends from the instrument panel cross beam (5) in the direction of the vehicle floor (4), wherein the console (6) is located in the load path between the support strut (7) and the vehicle floor (4).

The invention further relates to a method for assembling an instrument panel cross beam (5) on a vehicle body (2) of a vehicle (1).

## Description

The invention relates to a vehicle, in particular a motor vehicle, with a vehicle body having an instrument panel cross beam according to the preamble of claim 1 and a method for assembling an instrument panel cross beam on a vehicle body according to the preamble of claim 8.

In today's vehicles, an instrument panel cross beam is an assembly of sheet metal and plastic parts that forms a structural unit or skeleton of the instrument panel or dashboard.

The instrument panel cross beam is arranged and attached to the vehicle body between side parts of the vehicle body next to so-called A-pillars on a driver and passenger side of the vehicle and attached to a vehicle floor of the vehicle body in the area of a vehicle center line. Various elements of the instrument panel are attached to and held by the instrument panel cross beam.

Furthermore, today's vehicles have a floor console, which is a structural element with its own structural units, supports and brackets. The floor console is usually arranged along the vehicle centerline between the front seats of the vehicle and attached to the floor of the vehicle body.

US 6 843 521 B1 and US 2010/0013256 A1, for example, show such an arrangement and structure. An instrument panel cross beam is supported directly on the vehicle floor via support struts extending in the direction of a vehicle floor. A floor console is also attached to the vehicle floor. Parts of the floor console, in particular parts of a front end section of the floor console, can be connected to the support struts of the instrument panel cross beam and attached thereto.

Against this background, the invention is based on the objective of providing a vehicle with a vehicle body having an instrument panel cross beam and a method for assembling an instrument panel cross beam on a vehicle body, which enable a sturdy structure with a reduced use of materials and a lower weight or a reduction in manufacturing operations during an assembly process. Manufacturing costs are also to be reduced.

This task is solved by a vehicle with the features of claim 1 and by a method with the features of claim 8. Further particularly advantageous embodiments of the invention are disclosed in the respective subclaims.

It should be noted that the features listed individually in the following description can be combined with each other in any technically meaningful way and demonstrate further embodiments of the invention. The description additionally characterizes and specifies the invention, in particular in connection with the figures.

It should also be noted that a conjunction "and/or" used herein between two features and linking them together is always to be interpreted such that in a first embodiment of the subject matter according to the invention only the first feature may be present, in a second embodiment only the second feature may be present and in a third embodiment both the first and the second feature may be present.

The subject of the invention is a vehicle, in particular a motor vehicle such as a passenger car, bus, truck and the like, which has a vehicle body. The vehicle body, in turn, has opposite side parts spaced apart from one another in a transverse direction of the vehicle and a vehicle floor. An instrument panel cross beam is arranged between the side parts and attached to the respective side parts. A console is arranged on the vehicle floor and attached to the vehicle floor. At least one support strut extends from the instrument panel cross beam towards the vehicle floor. According to the invention, the console is located in the load path between the support strut and the vehicle floor.

In other words, the support strut has no direct force-conducting connection to the vehicle floor. The load path, i.e. the path taken by the force to support the instrument panel cross beam on the vehicle floor through the support strut, runs via structural elements of the console. The length of the support strut can be shorter, as it no longer has to completely bridge the distance between the instrument panel cross beam and the vehicle floor. Part of this distance is now bridged by the console arranged between the vehicle floor and the support strut. The console or part of the console is used to connect the support strut to the vehicle floor in a force-conducting manner. On the one hand, this saves material and connecting elements and reduces weight. On the other hand, assembling the instrument panel cross beam on the vehicle body is simplified, as the reduced number of connecting and fastening elements eliminates assembly steps.

In preferred embodiments, the console is a so-called center console. The center console is to be understood as a part of the instrument panel of the vehicle that begins approximately at the knee height of a person sitting in the vehicle between the two front footwells and extends to the position of an armrest between front seats of the vehicle.

According to other preferred embodiments, the at least one support strut is designed as a so-called stiffening strut. The stiffening strut has the effect of stiffening the instrument panel cross beam in an extreme event of the vehicle and prevents uncontrolled, deep penetration of the instrument panel into the passenger compartment of the vehicle by reliably transferring movement forces from the instrument panel cross beam via the console into the vehicle floor. On the other hand, the stiffening strut dissipates movement energy in the extreme event of the vehicle by means of a deformation specifically determined by the design.

According to further advantageous embodiments, the support strut is attached to the console via a distal end portion.

In preferred embodiments, the distal end portion is arranged parallel to a part of the console, which is supported on the vehicle floor, and is attached to the part. In further preferred embodiments, the distal end portion is arranged parallel to a side part of the console, which is supported on the vehicle floor, and is attached to the side part This means that the support strut does not guide the load path via a console structure extending essentially in a transverse direction of the vehicle, but via the side parts of the console extending essentially in a vertical direction of the vehicle. The support strut therefore does not couple to the top of the console, but laterally to the side part. Accordingly, the side parts are essentially not subjected to bending by the load path, but to a compressive force, which enables greater mechanical stability and resistance of the console for reliable force absorption with less material required. Although it is preferred to arrange the distal end portion parallel to a side part of the console and to to attach it thereto, it is in the sense of the invention, that the distal end portion could be fixed to any other part of the console, not only in the y-direction but also in any orientation on the vehicle environment.

According to other advantageous embodiments, the distal end portion is attached to the console by means of a screw connection, riveted connection, welded connection and/or adhesive connection. Screwed or riveted connections represent a positive connection between the support strut and the console in terms of the load path and enable a well-defined force transmission between the two components. In contrast, welded and adhesive connections represent a material connection between the support strut and the console, in which the force distribution can be distributed over a larger attachment surface.

It is particularly preferable that the load path between the support strut and the console is established via at least two attachment points of the support strut on the console, so that the stress on the connection occurring during the introduction of force is evenly distributed over the at least two attachment points. In addition, moments acting between the support strut and the console are better absorbed by at least two attachment points. The attachment points can, for example, be formed via screw, rivet, welded and/or adhesive connections, which connect the support strut to the console.

Further, subject of the invention is a method for assembling an instrument panel cross beam on a vehicle body of a vehicle, in particular a motor vehicle. The method comprises at least the following steps:
- arranging the instrument panel cross beam between spaced-apart opposite side parts of the vehicle body and attaching it thereto, and
- arranging a console on a vehicle floor of the vehicle body and attaching it thereto,
wherein a load path is established between at least one support strut, which extends from the instrument panel cross beam towards the vehicle floor, and the console.

It is to be understood that definitions of terms relating to the claimed method and relating to the effects and advantages of features of the claimed method can be fully referred to the disclosure of corresponding definitions, effects and advantages of the vehicle and vice versa. A repetition of explanations of correspondingly identical features, their effects and advantages can thus be dispensed with in favor of a more compact description, without such omissions having to be construed as a limitation for one of the disclosed objects of the invention.

According to a preferred embodiment, the support strut is attached to the console via a distal end portion.

According to further embodiments, the distal end portion of the support strut may be arranged to extend parallel to and be attached to a portion of the console which is supported on the vehicle floor. According to further embodiments, the distal end portion of the support strut may be arranged to extend parallel to and be attached to a side portion of the console which is supported on the vehicle floor. Although it is preferred to arrange the distal end portion parallel to a side part of the console and to attach it thereto, it is in the sense of the invention, that the distal end portion could be fixed to any other part of the console, not only in the y-direction but also in any orientation on the vehicle environment.

According to further preferred embodiments, the distal end portion is bolted, riveted, welded and/or bonded to the console.

Other advantageous embodiments provide for the load path between the support strut and the console to be established via at least two attachment points of the support strut to the console, for example via screw, rivet, welded and/or adhesive connections which connect the support strut to the console.

Further features and advantages of the invention are apparent from the following description of non-limiting embodiments of the invention, which will be explained in more detail below with reference to the drawing. In this drawing schematically show:
- Fig. 1: a partial perspective view of an embodiment of a vehicle according to the invention in a first assembly state,
- Fig. 2: a further partial perspective view of the vehicle from Fig. 1 in a second assembly state and
- Fig. 3: a still further partial perspective view of the vehicle of Fig. 1 in a third assembly state.

In the various figures, parts that are equivalent in terms of their function are always labelled with the same reference numerals so that they are generally only described once.

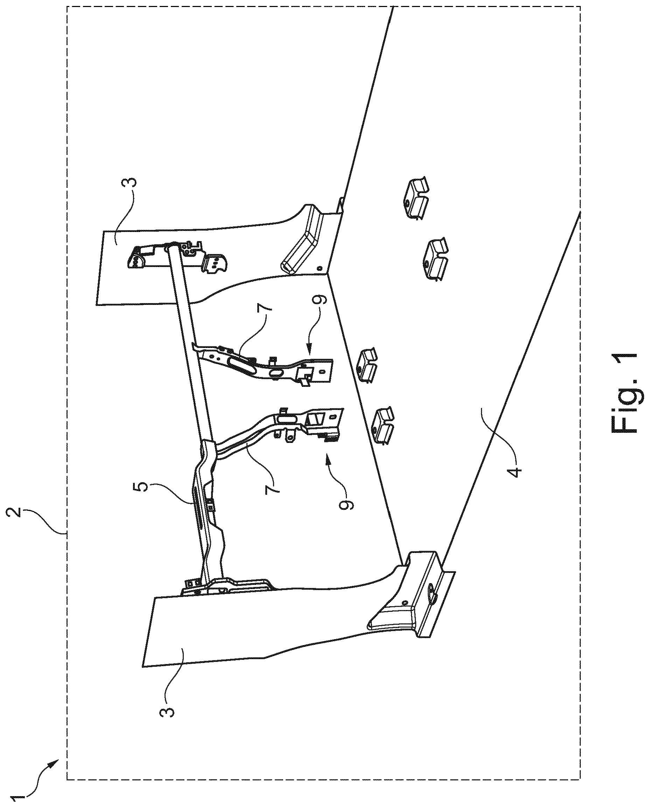

Fig. 1 is a schematic representation of a partial perspective view of an embodiment of a vehicle 1, e.g. motor vehicle, according to the invention in a first assembly state.

The vehicle 1 has a schematically indicated vehicle body 2 with side parts 3 opposite each other at a distance and a vehicle floor 4. In Fig. 1 it can be seen that an instrument panel cross beam 5 is arranged between the side parts 3. The instrument panel cross beam 5 is attached at both ends to one of the two side parts 3.

Fig. 1 shows the assembly state in which the instrument panel cross beam 5 is arranged and fastened between the two opposing side parts 3 of the vehicle body 2.

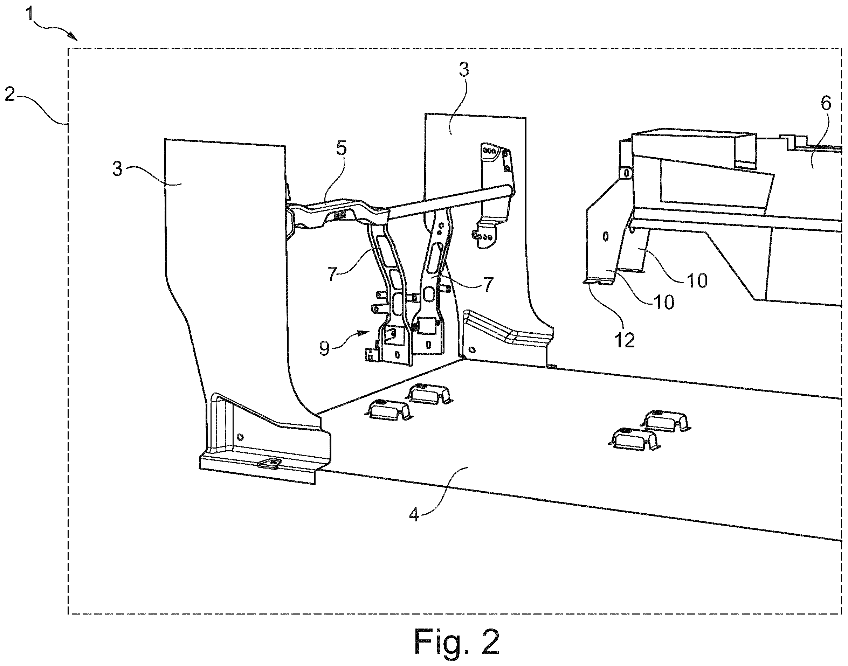

Fig. 2 is a schematic representation of a further perspective partial view of the vehicle 1 from Fig. 1 in a second assembly state, in which a console 6, which is configured as a center console in the present case, is going to be arranged on the vehicle floor 4 of the vehicle body 2. It can also be seen that at least one, in this case two, support struts 7 extend from the instrument panel cross beam 5 towards the vehicle floor 4.

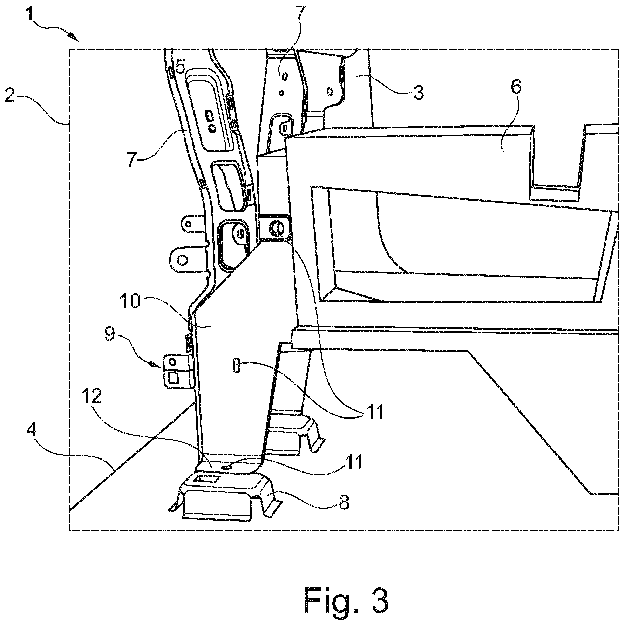

Fig. 3 is a schematic representation of yet another partial perspective view of the vehicle 1 from Fig. 1 in a third assembly state, in which the console 6 is attached to the vehicle floor 4. For example, the console 6 can be screwed, riveted, welded or bonded to the vehicle floor 4 at corresponding floor-side fastening elements 8. In order not to obstruct the view of the main components, the side part 3 of the vehicle body 2 in the foreground is omitted in the side view shown. Only the opposite side part 3 can be seen in the background of the illustration.

Reference is made to Figs. 1 to 3 in the following description.

It can be seen that the support struts 7 each have a distal end portion 9. The support struts 7 are each attached to the console 6 via this distal end portion 9, as can be clearly seen in Fig. 3. This establishes a load path between each of the support struts 7 extending from the instrument panel cross beam 5 towards the vehicle floor 4 and the console 6. The console 6 is thus in the load path between the support struts 7 and the vehicle floor 4. In Figs. 1 and 2, it can be clearly seen that the support struts 7 are shorter in length than they would be to bridge a distance between the instrument panel cross beam 5 and the vehicle floor 4. This gap is closed by the console 6, as shown in Fig. 3.

In Fig. 2, side parts 10 of the console 6 can be seen, via which the console 6 is supported in its front section on the vehicle floor 4 as shown in Fig. 3 and fastened via the fastening elements 8 in the later mentioned manner. It can also be seen from Fig. 3 that the distal end portion 9 of each support strut 7 runs essentially parallel to the corresponding side part 10 of the console 6. In this arrangement, the respective distal end portions 9 of the support struts 7 are attached to the corresponding side parts 10 of the console 6, for example screwed, riveted, welded or bonded to the side parts 10.

In the illustrated exemplary vehicle 1, two attachment points 11 are provided for the force-conducting connection between the respective support struts 7 and the corresponding side parts 10 of the console 6. As mentioned, the attachment points 11 can be designed as a screw, rivet, welded and/or adhesive connection. As can be seen in the figures, a bent end section 12 is arranged on each of the side parts 10, via which the side parts 10 rest on the fastening elements 8. The bent end section 12 is designed in the kind of a fastening flange. Indicated is an attachment point 11 for fastening said bent end section 12 to said fastening elements 8 with preferably contacting surfaces.

The vehicle according to the invention disclosed herein and the method according to the invention are not limited to the embodiments disclosed herein in each case, but also comprise further embodiments having the same effect, which result from technically expedient further combinations of the features of the vehicle or the method described herein. In particular, the features and combinations of features mentioned hereinbefore in the general description and the description of the figures and/or shown in the figures alone are usable not only in the respective combinations explicitly stated herein, but also in other combinations or in a stand-alone position, without leaving the scope of the present invention. Although it is preferred to arrange the distal end portion parallel to a side part of the console and to attach it thereto, it is in the sense of the invention, that the distal end portion could be fixed to any other part of the console, not only in the y-direction but also in any orientation on the vehicle environment.

### Reference numerals

- 1: Vehicle
- 2: Vehicle body
- 3: Side part
- 4: Vehicle floor
- 5: Instrument panel cross beam
- 6: Console
- 7: Support strut
- 8: Floor-side fastening element
- 9: Distal end portion
- 10: Side part
- 11: Attachment point
- 12: bent end section of 10

## Claims

1. A vehicle (1), in particular motor vehicle, having a vehicle body (2) with side parts (3) opposite one another at a distance and with a vehicle floor (4), wherein an instrument panel cross beam (5) is arranged between the side parts (3) and attached thereto and a console (6) is arranged on the vehicle floor (4) and attached thereto, wherein at least one support strut (7) extends from the instrument panel cross beam (5) in the direction of the vehicle floor (4),
**characterized in that**
the console (6) is located in the load path between the support strut (7) and the vehicle floor (4).

2. The vehicle according to claim 1,
**characterized in that**
the console (6) is a center console.

3. The vehicle according to claims 1 or 2,
**characterized in that**
the at least one support strut (7) is configured as a stiffening strut.

4. The vehicle according to any one of the preceding claims,
**characterized in that**
the support strut (7) is attached to the console (6) via a distal end portion (9).

5. The vehicle according to claim 4,
**characterized in that**
the distal end portion (9) of the support strut (7) is arranged parallel to a part (10) of the console (6), which is supported on the vehicle floor (4), and is attached thereto, or **in that** the distal end portion (9) of the support strut (7) is arranged parallel to a side part (10) of the console (6), which is supported on the vehicle floor (4), and is attached thereto.

6. The vehicle according to claims 4 or 5,
**characterized in that**
the distal end portion (9) is attached to the console (6) by means of a screw connection, riveted connection, welded connection and/or adhesive connection.

7. The vehicle according to any one of the preceding claims,
**characterized in that**
the load path between the support strut (7) and the console (6) is established via at least two attachment points (11) of the support strut (7) on the console (6).

8. A method for assembling an instrument panel cross beam (5) on a vehicle body (2) of a vehicle (1), in particular a motor vehicle, comprising at least the steps of:
- arranging the instrument panel cross beam (5) between side parts (3) of the vehicle body (2) which are opposite one another at a distance and attaching it thereto, and
- arranging a console (6) on a vehicle floor (4) of the vehicle body (2) and attaching it thereto,
**characterized in that**
a load path is established between at least one support strut (7) extending from the instrument panel cross beam (5) in the direction of the vehicle floor (4) and the console (6).

9. The method according to claim 8,
**characterized in that**
the support strut (7) is attached to the console (6) via a distal end portion (9).

10. The method according to claim 9,
**characterized in that**
the distal end portion (9) of the support strut (7) is arranged parallel to a part (10) of the console (6), which is supported on the vehicle floor (4), and is attached thereto, or **in that** the distal end portion (9) of the support strut (7) is arranged parallel to a side part (10) of the console (6), which is supported on the vehicle floor (4), and is attached thereto.

11. The method according to claims 9 or 10,
**characterized in that**
the distal end portion (9) is screwed, riveted, welded and/or bonded to the console (6).

12. The method according to any one of claims 8 to 11,
**characterized in that**
the load path between the support strut (7) and the console (6) is established via at least two attachment points (11) of the support strut (7) on the console (6).
